(19) Europäisches Patentamt
European Patent Office
Office européen des brevets

(11) EP 1 369 039 B1

(12) **EUROPEAN PATENT SPECIFICATION**

(45) Date of publication and mention of the grant of the patent:
**12.01.2005 Bulletin 2005/02**

(51) Int Cl.7: **A01N 43/40**
// (A01N43/40, 39:04, 35:10)

(21) Application number: **03017669.7**

(22) Date of filing: **12.10.2000**

(54) **Synergistic herbicidal methods and composition**

Synergistische herbizide Zusammensetzungen und Verfahren

Procédés et compositions herbicides synergiques

(84) Designated Contracting States:
**AT BE CH CY DE DK ES FI FR GB GR IE IT LI LU MC NL PT SE**
Designated Extension States:
**AL LT LV MK RO SI**

(30) Priority: **14.10.1999 US 159383 P**

(43) Date of publication of application:
**10.12.2003 Bulletin 2003/50**

(60) Divisional application:
**04021891.9 / 1 486 119**

(62) Document number(s) of the earlier application(s) in accordance with Art. 76 EPC:
**00972742.1 / 1 220 609**

(73) Proprietor: **BASF AKTIENGESELLSCHAFT**
**67056 Ludwigshafen (DE)**

(72) Inventors:
- **Pidskanly, Ronald Steven**
**Edmonton, Alberta T6H 029 (CA)**
- **Killins, Roy Allan**
**Lethbridge, Alberta T1H 1H1 (CA)**

(56) References cited:
**WO-A-94/07368** **US-A- 4 427 440**
**US-A- 5 296 449**

- **WHITE R H ET AL: "AC 900001: A NEW HERBICIDE FOR BROADLEAF WEED CONTROL IN CEREALS" PROCEEDINGS BRITISH CROP PROTECTION CONFERENCE - PESTS AND DISEASES, XX, XX, vol. 1, 1999, pages 47-52, XP000989500**
- **DATABASE CROPU [Online] Derwent publication Ltd.; SALEMBIER J F: "Research on the Complementation of Isoproturon and Foliar Anti-Grass Herbicides. (Recherche de la Complementarite de L'isoproturon Avec des Herbicides a Action Antigraminee Foliair)" retrieved from STN Database accession no. 1991-82508 XP002170514 & MEDED.FAC.LANDBOUWWET.RIJKSUNIV.GEN T (55, NO. 3B, 1177-86, 1990) 7 TAB. CODEN: MFLRA3,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 369 039 B1

## Description

Aryloxypicolinamides such as those described in U.S. 5,294,597 demonstrate excellent herbicidal activity, in particular against broadleaf weeds in cereal crops. However, said aryloxypicolinamides, when used as the sole active ingredient, do not always achieve effective control of the full spectrum of weed species encountered in commercial agronomic practice at application rates required for acceptable crop safety. Such gaps in the spectrum of control can often be remedied by co-treatment with another herbicide known to be effective against the relevant weed species. It has been disclosed (U.S. 5,674,807) that selected combinations of aryloxypicolinamides produce not merely the expected additive effect, but may exhibit a significant synergistic effect (i.e., thecombination shows a much higher level of activity than that which could be predicted from that of the individual components). This synergistic effect enables a greater margin of safety for the crop species. However, the disclosure is limited to two-way combinations of aryloxypicolinamides and members of selected known chemical classes which do not include herbicidal partners in the cyclohexanedione class.

Therefore it is an object of this invention to provide synergistic, crop-selective herbicidal combinations with broad-spectrum weed control.

It is another object of this invention to provide herbicidal compositions useful for the synergistic control of a broad-spectrum of weeds in the presence of a crop.

Although aryloxypicolinamide compounds demonstrate excellent herbicidal activity, when applied alone they do not always achieve the desired spectrum of weed control at rates required for acceptable crop safety. Surprisingly, it has now been found that a two-way combination comprising an aryloxypicolinamide compound of formula I

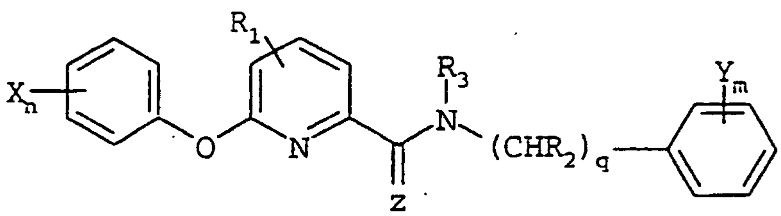

I

wherein

Z represents an oxygen or sulfur atom;

$R_1$ represents a hydrogen or halogen atom or an alkyl or haloalkyl group;

$R_2$ represents a hydrogen or an alkyl group;

q is 0 or 1;

$R_3$ represents a hydrogen or an alkyl or alkenyl group; the or each group X independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, haloalkylthio, alkenylthio, alkynylthio, alkylsulphinyl, alkylsulphonyl, alkyloxyminoalkyl or alkenyloximinoalkyl group;

n is 0 or an integer from 1 to 5;

the or each group Y independently represents a halogen atom or an alkyl, nitro, cyano, haloalkyl, alkoxy or haloalkoxy group; and

m is 0 or an integer from 1 to 5

or one of its environmentally compatible salts;

plus a second herbicide selected from a cyclohexanedione, herbicide demonstrates a synergistic herbicidal effect. Further, unexpectedly, a selected three-way combination comprising an aryloxypicolinamide compound of formula I and 2,4-D or one of its environmentally compatible esters or salts; and a third herbicide selected from a cyclohexanedione, herbicide produces a significant synergistic effect. Advantageously, the synergistic two-way and three-way combinations of the invention allow for lower application rates of said aryloxypicolinamide with concomittant increased spectrum of weed control. Moreover, the synergistic herbicidal methods and compositions of the invention allow for effective resistance management.

The present invention provides a method for the synergistic control of undesirable plants such as Polygonum, Kochia, Galeopsis, Galium, Stelaria, Sinapis, and Avena which comprises applying to the locus of said plants or to the foliage or stems of said plants a synergistically effective amount of a two-way combination comprising an aryloxypicolinamide compound of formula I plus a second herbicide selected from a cyclohexanedione, herbicide. The present

invention also provides a method for the synergistic control of undesirable plants which comprises applying to the locus of said plants a synergistically effective amount of a three-way combination comprising an aryloxypicolinamide compound of formula I, 2,4-D or one of its environmentally compatible esters or salts, and a third herbicide selected from a cyclohexanedione herbicide.

The present invention also provides a synergistic herbicidal composition which comprises an agriculturally acceptable carrier and a synergistically effective amount of a two-way combination of an aryloxypicolinamide compound of formula I plus a second herbicide selected a cyclohexanedione herbicide; or a three-way combination of an aryloxypicolinamide compound of formula I, 2,4-D or one of its environmentally compatible esters or salts, and a third herbicide selected from a cyclohexanedione herbicide.

Aryloxypicolinamides of formula I

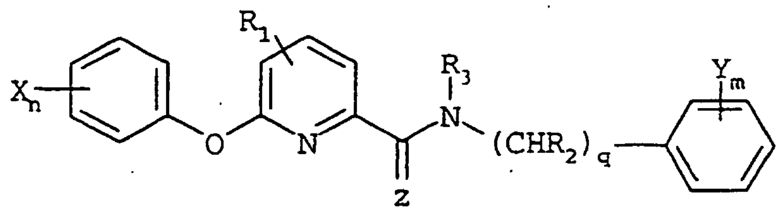

I

wherein Z, $R_1$, $R_2$, $R_3$, X, n, Y and m are defined herein above and methods for their preparation are described in U. S. 5,294,597. Said aryloxypicolinamides demonstrate excellent herbicidal activity, in particular against broadleaf weeds in cereal crops. However, said aryloxypicolinamides when used as the sole active ingredient do not always achieve effective control of the full spectrum of weed species encountered in commercial agronomic practice, in conjunction with reliable selectivity for the crop species.

Surprisingly, it has now been found that a two-way combination of an aryloxypicolinamide of formula I and a second herbicide selected from a cyclohexanedione herbicide provides synergistic control of troublesome weeds such as *Polygonum, Kochia, Galeopsis, Galium, Stelaria, Sinapis, and Avena.* Also, surprisingly, a three-way combination of an aryloxypicolinamide of formula I and 2,4-D or one of its environmentally compatible esters or salts plus a third herbicidal compound selected a cyclohexanedione herbicide provides synergistic weed control. That is, the application of the two-way or three-way combinations of the invention gives a mutual reinforcing action such that the application rates of the individual herbicidal components can be reduced and still the same herbicidal effect is achieved or, alternatively, the application of the combination of herbicidal components demonstrates a greater herbicidal effect than expected from the effect of the application of the individual herbicidal components when applied singly at the rate at which they are present in the combination (synergistic effect).

The aryloxypicolinamides of formula I may exist in the form of their environmentally compatible salts. Suitable salts are, in general, the salts of those cations, or the acid addition salts of those acids, whose cations, or anions, respectively, do not adversely affect the herbicidal action of the active ingredients.

Suitable cations are, in particular, ions of the alkali metals, preferably lithium, sodium and potassium, of the alkaline earth metals, preferably calcium and magnesium, and of the transition metals, preferably manganese, copper, zinc and iron, and also ammonium, it being possible in this case, if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, tetramethylammonium, tetrabutylammonium, 2-(2-hydroxyeth-1-oxy)eth-1-yl ammonium, di(2-hydroxyeth-1-yl)ammonium, trimethylbenzylammonium, furthermore phosphonium ions, sulfonium ions, preferably tri($C_1$-$C_4$-alkyl)sulfon-ium and sulfoxonium ions, preferably, tri ($C_1$-$C_4$-alkyl)sulfoxonium

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of $C_1$-$C_4$-alkanoic acids, preferably formate, acetate, propionate and butyrate.

In the specification and claims, the term 2,4-D designates 2,4-dichlorophoxyacetic acid. 2,4-D may also exist in the form of its environmentally compatible esters or salts.

Suitable salts are, in general, the salts of those cations, which do not adversely affect the herbicidal action of the active

ingredients.

Suitable cations are, in particular, ions of the alkali metals, preferably lithium, sodium and potassium, of the alkaline earth metals, preferably calcium or magnesium, and of the transition metals, preferably manganese, copper, zinc and iron, and also ammonium, it being possible in this case if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, (2-hydroxy-eth-1-yl)ammonium, di(2-hydroxy-eth-1-yl)ammonium or tri(2-hydroxy-eth-1-yl)ammonium, Expecially suitable cations are sodium; dimethylammonium, di (2-hydroxy-eth-1-yl)ammonium and tri(2-hydroxy-eth-1-yl)ammonium.

Suitable esters of 2,4-D are the $C_1$-$C_8$-alkyl esters, for example the methyl, ethyl, propyl, 1-methylethyl, butyl, 1-methylpropyl, 2-methylpropyl, 1,1-dimethylethyl, pentyl, 1-methylbutyl, 2-methylbutyl,.3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1-ethyl-1-methylpropyl, 1-ethyl-3-methylpropyl, heptyl, 5-methyl-1-hexyl, octyl, 6-methyl-1-heptyl, 2-ethyl-1-hexyl or 4-ethyl-1-hexyl esters, or the $C_1$-$C_4$-alkoxy-$C_1$-$C_4$-alkyl esters for example the methoxymethyl, ethoxymethyl, propoxymethyl, (1-methylethoxy)methyl, butoxymethyl, (1-methylpropoxy)methyl, (2-methylpropoxy)-methyl, (1,1-dimethylethoxy)methyl, 2-(methoxy)ethyl, 2-(ethoxy)ethyl, 2- (propoxy)ethyl, 2- (1-methylethoxy) ethyl, 2- (butoxy) ethyl, 2-(1-methylpropoxy)ethyl, 2-(2-methylpropoxy) ethyl, 2-(1,1-dimethylethoxy)ethyl, 2-(methoxy)propyl, 2-(ethoxy)propyl, 2-(propoxy)propyl, 2-(1-methylethoxy)-propyl, 2-(butoxy)propyl, 2-(1-methylpropoxy)propyl, 2-(2-methylpropoxy)propyl, 2-(1,1-dimethylethoxy)propyl, 3-(methoxy)propyl, 3-(ethoxy)-propyl, 3-(propoxy)propyl, 3-(1-methylethoxy)propyl, 3-(butoxy)propyl, 3-(1-methylpropoxy)propyl, 3-(2-methylpropoxy)propyl, 3-(1,1-dimethylethoxy)propyl, 2-(methoxy)butyl, 2-(ethoxy)butyl, 2-(propoxy)butyl, 2-(1-methylethoxy)butyl, 2-(butoxy)butyl, 2-(1-methylpropoxy)butyl, 2-(2-methylpropoxy)butyl, 2-(1,1-dimethylethoxy) butyl, 3-(methoxy)butyl, 3-(ethoxy)-butyl, 3-(propoxy)butyl, 3-(methylethoxy)butyl, 3-(butoxy)butyl), 3-(1-methylpropoxy)butyl, 3-(2-methylpropoxy)butyl, 3-(1,1-dimethylethoxy)butyl, 4-(methoxy)butyl, 4-(ethoxy)butyl, 4-(propoxy) butyl, 4-(1-methylethoxy)butyl, 4-(butoxy)butyl, 4-(1-methylpropoxy)butyl, 4- (2-methylpropoxy)butyl or 4-(1,1,-dimethylethoxy)butyl esters;

Especially suitable esters are the 1-methyl-1-ethyl, butyl, 6-methyl-1-heptyl, 2-ethyl-1-hexyl or 2-butoxy-1-ethyl esters.

A cyclohexanedione herbicide suitable for use in the methods and compositions of the invention include sethoxydim, clethodim, alloxydim, tralkoxydim, cycloxydim, butroxydin, clefoxydim, cloproxydim, tepraloxydim or one of its environmentally compatible salts preferably tralkoxydim. Suitable salts are in general the salts of those cations which do not adversely affect the herbicidal action of the active ingredient. They are similar to those listed tor the compounds of formula I.

In the specification and claims, the term alkyl (alone or in combination) represents a $C_1$-$C_6$-alkyl group, especially a $C_1$-$C_4$-alkyl group; the term alkoxy (alone or in combination) represents a $C_1$-$C_6$-alkoxy group, especially a $C_1$-$C_4$-alkoxy group; the term alkenyl (alone or in combiantion) represents a $C_3$-$C_6$-alkenyl group, especially a $C_3$-$C_4$-alkenyl group; the term alkynyl represents a $C_3$-$C_6$-alkynyl group, especially a $C_3$-$C_4$-alkynyl group.

Preferred synergistic combinations of the invention are those two-way or three-way combinations containing a formula I aryloxypicolinamide wherein

Z is oxygen;
$R_1$ is hydrogen;
q is 0;
$R_3$ is hydrogen;
X is haloalkyl; and
Y is hydrogen or fluorine.

Especially those two-way or three-way combinations containing a formula I aryloxypicolinamide wherein n=1 and X is linked in meta-position to the phenyl radical (with regard to the oxygen bridge)

More preferred synergistic two-way and three-way combinations are those wherein the formula I compound is N-(4-fluorophenyl)-6-[3-trifluoromethyl)phenoxyl-2-pyridine carboxamide ilustrated below , and hereinafter designated, picolinafen.

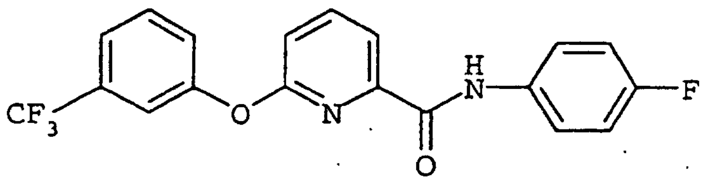

picolinafen

Preferred second herbicide for the two-way combinations of the invention is tralkoxydim.
Preferred third herbicide for the three-way combination of the invention is tralkoxydim.
In actual practice, the combination of the invention may be applied simultaneously (as a tank mix or a premix), separately or sequentially.
Thus, in accordance with the method of invention a synergistically effective amount of a two-way combination of aryloxypicolinamide and a second herbicide selected from cyclohexanedione herbicide; or a synergistically effective amount of a three-way combination of an aryloxypicolinamide, 2,4-D, or one of its environmentally compatible salts or esters and a third herbicide selected from a cyclohexanedione is applied to the locus, foliage or stems of undesirable plants, particularly plants selected from the genera Polygonum, Kochia, Galeopsis, Galium, Stelaria, Sinapis, and Avena, optionally in the presence of a crop, preferably a cereal crop such as wheat, barley, rice, corn, rye or the like.
The synergistically effective amount of the two- and three-way combinations described above may vary according to prevailing conditions such as the particular second and third component present, weed pressure, application timing, weather conditions, soil conditions, mode of application, topographical character, target crop species and the like.
Preferred two-way combinations of the invention are those wherein the weight/weight ratio of the aryloxypicolinamide of formula I to the second compound is about:

aryloxypicolinamide:cyclohexenedione herbicide, 1:1 to 1:20;

More preferred two-way combinations of the invention are those wherein the weight/weight ratio of picolinafen to the second component is about:

picolinafen:tralkoxydim, 1:1 to 1:20;

Preferred three-way combinations of the invention are those wherein the weight/weight ratio of the aryloxypicolinamide of formula I to 2,4-D (or its salts or esters) to third component is about:

aryloxypicolinamide: 2,4 D (or its salts or esters): cyclohexanedione herbicide; 1:1:1 to 1:20:25;

More preferred three-way combinations of the invention are those wherein the weight/weight/weight ratio of picolinafen to 2,4-D to third component is about:

picolinafen:2,4-D:tralkoxydim, 1:1:1 to 1:20:25; or

The present invention also provides a synergistic herbicidal composition comprising an agriculturally acceptable carrier and a synergistically effective amount of a two-way combination of an aryloxypicolinamide of formula I and a second herbicidal compound selected from a cyclohexanedione herbicide. The present invention further provides a synergistic herbicidal composition which comprises an agriculturally acceptable carrier and a synergistically effective amount of a three-way combination of an aryloxypicolinamide compound of formula I, 2,4-D, or one of its environmentally compatible salts or esters and a third herbicidal compound selected from a cyclohexanedione herbicide.
The agriculturally acceptable carrier may be a solid or a liquid, preferably a liquid, more preferably water. While not required, the combination compositions of the invention may also contain other additives such as fertilizers, inert formulation aids, i.e. surfactants, emulsifiers, defoamers, dyes, extenders or any of the conventional inert ingredients typically employed in herbicidal formulated products.
Compositions according to the invention may be formulated in any conventional form, for example in the form of a twin pack, or as an aqueous concentrate, soluble granular, dispersible granular or the like.
Preferred two-way combination compositions of the invention are those compositions wherein the aryloxypicolinamide compound is picolinafen. More preferred two-way combination compositions of the invention are those compositions of the invention wherein the weight/weight ratio of picolinafen to second component is about:

picolinafen:tralkoxydim, 1:1 to 1:20;

Preferred three-way combination compositions of the invention are those compositions wherein the picolinamide compound is picolinafen. Also preferred are those synergistic three-way combination compositions having a third herbicide which is tralkoxydim . More preferred three-way combination compositions of the invention are those compositions wherein the weight/weight/weight ratio of picolinafen to 2,4-D to third component is about:

picolinafen:2,4-D:tralkoxydim, 1:1:1 to 1:20:25; or

For a more clear understanding of the invention, specific examples thereof are set forth below. These examples are merely illustrative, and are not to be understood as limiting the scope and underlying principles of the invention in any way.

In the following examples, synergism for two-way combinations is determined by the Colby method (S.R. Colby, Weeds 1967 (15), 20), i.e. the expected (or predicted) response of the combination is calculated by taking the product of the observed response for each individual component of the combination when applied alone divided by 100 and subtracting this value from the sum of the observed response for each component when applied alone. Synergism of the combination is then determined by comparing the observed response of the combination to the expected (or predicted) response as calculated from the observed responses of each individual component alone. If the observed response of the combination is greater than the expected (or predicted) response then the combination is said to be synergistic and falls within the definition of synergistic effect as previously defined.

The foregoing is illustrated mathematically below, wherein a two-way combination, $C_2$, is composed of component X plus component Y and Obs. designates the observed response of the combination $C_2$.

$$(X + Y) - \frac{XY}{100} = \text{Expected response (Exp.)}$$

$$\text{Synergism} \equiv \text{Obs.} > \text{Exp.}$$

In similar manner for the case of three-way combination, $C_3$, is composed of component X plus component Y plus component X and Obs. designates the observed response of the combination $C_3$.

$$(X + Y + Z) - \frac{(XY+XZ+YZ)}{100} + \frac{XYZ}{10000} = \text{Exp.}$$

$$\text{Synergism} \equiv \text{Obs.} > \text{Exp.}$$

In the following examples, crop tolerance ratings are taken periodically throughout the growing season. The first rating is taken one to two weeks after treatment and the final rating is taken just prior to harvest. For all treatments described in the following examples crop tolerance was commercially acceptable, i.e. ≤ 20% injury, on each of the three crops tested. None of the treatments demonstrated commercially unacceptable injury to barley, durum wheat or hard red spring wheat.

EXAMPLE 1

Evaluation of the Herbicidal Activity of a Combination of Picolinafen and Tralkoxydim

Following essentially the same procedure as described in Example 1 and employing picolinafen and tralkoxydim, the data shown in Table III are obtained

As can be seen from the data shown on Table III, the application of a combination of picolinafen plus tralkoxydim gives significantly greater weed control than that which could be predicted from the weed control resulting from the application of either picolinafen alone or tralkoxydim alone.

TABLE III

Evaluation of the Herbicidal Activity of a Combination of Picolinafen plus Tralkoxydim

| Weed Species | picolinafen 50g/ha | tralkoxydim 200g/ha | picolinafen + tralkoxydim 50g/ha + 200 g/ha | |
|---|---|---|---|---|
| | Percent Control | | | |
| | | | Observed | Expected |
| *Avena fatua* | 5 | 97 | 98 | 97 |
| *Sinapis arvensis* | 78 | 0 | 94 | 78 |
| *Brassica napus* | 70 | 0 | 95 | 70 |
| *Brassica napus (imidazolinone tolerant)* | 65 | 0 | 92 | 65 |
| Amaranthus retroflexus | 90 | 1 | 98 | 90 |
| Chenopodium album | 57 | 0 | 93 | 57 |
| *Polygonum convolvulus* | 54 | 0 | 87 | 54 |
| *Vaccaria pyramaidata* | 63 | 0 | 86 | 63 |

EXAMPLE 2

Evaluation of the Herbicidal Activity of a Combination of Picolinafen, Tralkoxydim and 2,4-D

Following essentially the same procedure as described in Example 1 and employing picolinafen, 2,4-D, and tralkoxydim, the data shown in Table VII are obtained.

As can be seen from the data on Table VII, the application of a combination of picolinafen, 2,4-D and tralkoxydim gives significantly greater weed control than that which could be predicted from the weed control resulting from the application of picolinafen alone, 2,4-D alone or tralkoxydim alone.

TABLE VII

Evaluation of the Herbicidal Activity of a Combination of Picolinafen plus 2,4-D and Tralkoxydim

| Weed Species | picolinafen 50g/ha | tralkoxydim 200g/ha | 2,4-D 280g/ha | picolinafen + 2,4-D + tralkoxydim 50g/ha + 200g/ha + 280g/ha | |
|---|---|---|---|---|---|
| | Percent Control | | | Observed | Expected |
| *Avena fatua* | 5 | 97 | 2 | 98 | 97 |
| *Sinapis arvensis* | 78 | 0 | 92 | 99 | 98 |
| *Brassica napus* | 70 | 0 | 93 | 100 | 98 |
| *Brassica napus (imidazolinone tolerant)* | 65 | 0 | 94 | 100 | 98 |
| *Chenopodium album* | 57 | 0 | 91 | 98 | 96 |
| *Polygonum convolvulus* | 54 | 0 | 48 | 90 | 76 |
| *Vaccaria pyramaidata* | 63 | 0 | 51 | 90 | 82 |

## Claims

1. A synergistic herbicidal composition which comprises an agriculturally acceptable carrier and a synergistically effective amount of a two-way combination of:

an aryloxypicolinamide of formula I

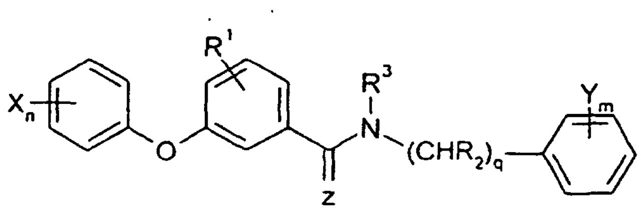

I

wherein

| | |
|---|---|
| Z | represents an oxygen or sulfur atom; |
| $R_1$ | represents a hydrogen or halogen atom or an alkyl or haloalkyl group; |
| $R_2$ | represents a hydrogen or an alkyl group; |
| q | is 0 or 1; |
| $R_3$ | represents a hydrogen or an alkyl or alkenyl group; |
| the or each group X | independently represents a halogen atom or an optionally substituted alkyl or alkoxy group, preferably a haloalkyl group, or an alkenyloxy, cyano, carboxy, alkoxycarbonyl, (alkylthio) carbonyl, alkylcarbonyl, amido, alkylamido, nitro, alkylthio, haloalkylthio, alkenylthio, alkynylthio, alkylsulphinyl, alkylsulphonyl, alkyloxyiminoalkyl or alkenyloximinoalkyl group; |
| n | is 0 or an integer from 1 to 5; |
| the or each group Y | independently represents a halogen atom or an alkyl, nitro, cyano, haloalkyl, alkoxy or haloalkoxy group; and |
| m | is 0 or an integer from 1 to 5 |

or one of its environmentally compatible salts;
and a second herbicide which is a cyclohexandione herbicide.

2. The composition according to claim 1 having a formula I aryloxypicolinamide wherein

| | |
|---|---|
| Z | is oxygen; |
| R, | is hydrogen; |
| q | is 0; |
| $R_3$ | is hydrogen; |
| X | is haloalkyl; and |
| Y | is hydrogen or fluorine. |

3. The composition according to claim 2 wherein said formula I aryloxypicolinamide is picolinafen.

**4.** The composition according claim 1 wherein the second herbicide is tralkoxydim.

**5.** The composition according to claim 4 wherein said formula I aryloxypicolinamide is picolinafen.

**6.** A synergistic herbicidal composition which comprises an agriculturally acceptable carrier and a synergistically effective amount of a three-way combination consisting essentially of:

an aryloxypicolinamide of formula I

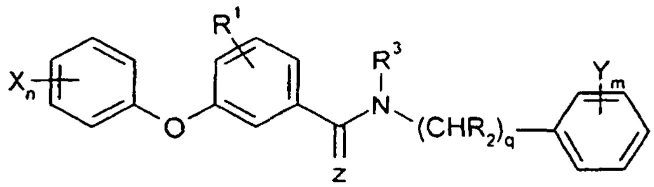 I

wherein

| | |
|---|---|
| Z | represents an oxygen or sulfur atom; |
| $R_1$ | represents a hydrogen or halogen atom or an alkyl or haloalkyl group; |
| $R_2$ | represents a hydrogen or an alkyl group; |
| q | is 0 or 1; |
| $R_3$ | represents a hydrogen or an alkyl or alkenyl group; |
| the or each group X independently | represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, haloalkylthio, alkenylthio, alkynylthio, alkylsulphinyl, alkylsulphonyl, alkyloxyiminoalkyl or alkenyloximinoalkyl group; |
| n | is 0 or an integer from 1 to 5; |
| the or each group Y independently | represents a halogen atom or an alkyl, nitro, cyano, haloalkyl, alkoxy or haloalkoxy group; and |
| m | is 0 or an integer from 1 to 5; |

or one of its environmentally compatible salts;
a second herbicide which is a cyclohexanedione herbicide and a third herbicide which is 2,4-D or one of its environmentally compatible esters or salts.

**7.** The composition according to claim 6 having a formula I aryloxypicolinamide wherein

Z is oxygen;

$R_1$ is hydrogen;

q is 0;

$R_3$ is hydrogen;

X is haloalkyl; and

Y is hydrogen or fluorine.

8. The composition according to claim 7 wherein said formula I aryloxypicolinamide is picolinafen.

9. The composition according to claim 6 wherein the second herbicide is tralkoxydim.

10. The composition according to claim 9 wherein said formula I aryloxypicolinamide is picolinafen.

11. A method for the synergistic control of undesirable plants, which comprises applying to the locus of said plants or to the foliage or stems of said plants a synergistically effective amount of the compositions as claimed in any of claims 1 to 10.

**Patentansprüche**

1. Synergistische herbizide Zusammensetzung, die einen landwirtschaftlich unbedenklichen Träger und eine synergistisch wirksame Menge einer Zweierkombination aus
einem Aryloxypicolinamid der Formel I

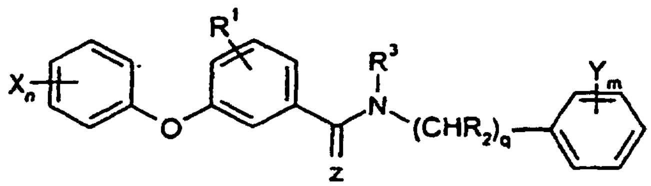

I

in der

| | |
|---|---|
| Z | ein Sauerstoff- oder Schwefelatom bedeutet, |
| $R_1$ | ein Wasserstoff- oder Halogenatom oder eine Alkyl- oder Halogenalkylgruppe bedeutet, |
| $R_2$ | ein Wasserstoffatom oder eine Alkylgruppe bedeutet, |
| q | 0 oder 1 bedeutet, |
| $R_3$ | ein Wasserstoffatom oder eine Alkyl- oder Alkenylgruppe bedeutet, |
| die oder jede Gruppe X | unabhängig ein Halogenatom oder eine gegebenenfalls substituierte Alkyl- oder Alkoxygruppe, vorzugsweise eine Halogenalkylgruppe, oder eine Alkenyloxy-, Cyan-, Carboxy-, Alkoxycarbonyl-, (Alkylthio)carbonyl-, Alkylcarbonyl-, Amido-, Alkylamido-, Nitro-, Alkylthio-, Halogenalkylthio-, Alkenylthio-, Alkinylthio-, Alkylsulfinyl-, Alkylsulfonyl-, Alkyloxyiminoalkyl- oder Alkenyloximinoalkylgruppe bedeutet, |
| n | 0 oder eine ganze Zahl von 1 bis 5 bedeutet, |
| die oder jede Gruppe Y | unabhängig ein Halogenatom oder eine Alkyl-, Nitro-, Cyan-, Halogenalkyl-, Alkoxy- oder Halogenalkoxygruppe bedeutet, und |
| m | 0 oder eine ganze Zahl von 1 bis 5 bedeutet, |

oder einem seiner umweltverträglichen Salze
und einem zweiten Herbizid, bei dem es sich um ein Cyclohexandionherbizid handelt,
enthält.

**2.** Zusammensetzung nach Anspruch 1 mit einem Aryloxypicolinamid der Formel I, in der

| | |
|---|---|
| Z | Sauerstoff bedeutet, |
| $R_1$ | Wasserstoff bedeutet, |
| q | 0 bedeutet, |
| $R_3$ | Wasserstoff bedeutet, |
| X | Halogenalkyl bedeutet und |
| Y | Wasserstoff oder Fluor bedeutet. |

**3.** Zusammensetzung nach Anspruch 2, wobei es sich bei dem Aryloxypicolinamid der Formel I um Picolinafen handelt.

**4.** Zusammensetzung nach Anspruch 1, wobei es sich bei dem zweiten Herbizid um Tralkoxydim handelt.

**5.** Zusammensetzung nach Anspruch 4, wobei es sich bei dem Aryloxypicolinamid der Formel I um Picolinafen handelt.

**6.** Synergistische herbizide Zusammensetzung, die einen landwirtschaftlich unbedenklichen Träger und eine synergistisch wirksame Menge einer Dreierkombination, die im wesentlichen aus
einem Aryloxypicolinamid der Formel I

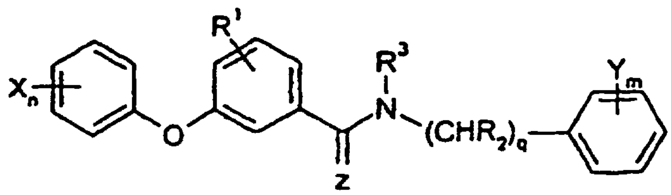

I

in der

| | |
|---|---|
| Z | ein Sauerstoff- oder Schwefelatom bedeutet, |
| $R_1$ | ein Wasserstoff- oder Halogenatom oder eine Alkyl- oder Halogenalkylgruppe bedeutet, |
| $R_2$ | ein Wasserstoffatom oder eine Alkylgruppe bedeutet, |
| q | 0 oder 1 bedeutet, |
| $R_3$ | ein Wasserstoffatom oder eine Alkyl- oder Alkenylgruppe bedeutet, |
| die oder jede Gruppe X | unabhängig ein Halogenatom oder eine gegebenenfalls substituierte Alkyl- oder Alkoxygruppe, vorzugsweise eine Halogenalkylgruppe, oder eine Alkenyloxy-, Cyan-, Carboxy-, Alkoxycarbonyl-, (Alkylthio)carbonyl-, Alkylcarbonyl-, Amido-, Alkylamido-, Nitro-, Alkylthio-, Halogenalkylthio-, Alkenylthio-, Alkinylthio-, Alkylsulfinyl-, Alkylsulfonyl-, Alkyloxyiminoalkyl- oder Alkenyloximinoalkylgruppe bedeutet, |
| n | 0 oder eine ganze Zahl von 1 bis 5 bedeutet, |
| die oder jede Gruppe Y | unabhängig ein Halogenatom oder eine Alkyl-, Nitro-, Cyan-, Halogenalkyl-, Alkoxy- oder Halogenalkoxygruppe bedeutet, und |

| | |
|---|---|
| m | 0 oder eine ganze Zahl von 1 bis 5 bedeutet, |

oder einem seiner umweltverträglichen Salze,
einem zweiten Herbizid, bei dem es sich um ein Cyclohexandionherbizid handelt, und einem dritten Herbizid, bei dem es sich um 2,4-D oder einen/eines seiner umweltverträglichen Ester oder Salze handelt, besteht, enthält.

**7.** Zusammensetzung nach Anspruch 6 mit einem Aryloxypicolinamid der Formel I, in der

Z Sauerstoff bedeutet,

$R_1$ Wasserstoff bedeutet,

q 0 bedeutet,

$R_3$ Wasserstoff bedeutet,

X Halogenalkyl bedeutet und

Y Wasserstoff oder Fluor bedeutet.

**8.** Zusammensetzung nach Anspruch 7, wobei es sich bei dem Aryloxypicolinamid der Formel I um Picolinafen handelt.

**9.** Zusammensetzung nach Anspruch 6, wobei es sich bei dem zweiten Herbizid um Tralkoxydim handelt.

**10.** Zusammensetzung nach Anspruch 9, wobei es sich bei dem Aryloxypicolinamid der Formel I um Picolinafen handelt.

**11.** Verfahren zur synergistischen Bekämpfung von unerwünschten Pflanzen, **dadurch gekennzeichnet, daß** man auf den Standort der Pflanzen oder auf das Blattwerk oder die Stengel der Pflanzen eine synergistisch wirksame Menge der Zusammensetzungen nach einem der Ansprüche 1 bis 10 ausbringt.

## Revendications

**1.** Composition herbicide synergique qui comprend un support acceptable en agriculture et une quantité efficace synergiquement d'une combinaison binaire d'un aryloxypicolinamide de formule I

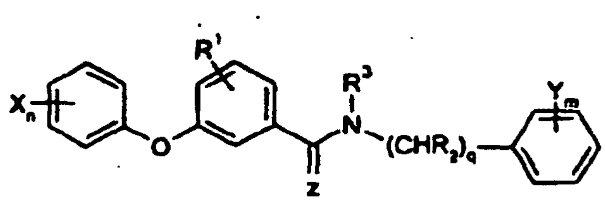

I

dans laquelle

| | |
|---|---|
| Z | représente un atome d'oxygène ou de soufre; |
| $R_1$ | représente un atome d'hydrogène ou d'halogène ou un radical alkyle ou halogènoalkyle; |
| $R_2$ | représente un hydrogène ou un radical alkyle; |
| q | est 0 ou 1; |
| $R_3$ | représente un hydrogène ou un radical alkyle ou alcényle; |
| le ou chaque groupe X | représente indépendamment un atome d'halogène ou un radical alkyle ou alcoxy, éventuellement substitué, de préférence un radical halogènoalkyle, ou un radical alcényloxy, cyano, carboxy, alcoxycarbonyle, (alkylthio)carbonyle, alkylcarbonyle, amido, alkylamido, nitro, alkylthio, halogènoalkylthio, alcénylthio, alcynylthio, alkylsulfinyle, alkylsulfonyle, alkyloxyiminoalkyle ou alcényloxyiminoalkyle; |

| | |
|---|---|
| n | est 0 ou un nombre entier de 1 à 5; |
| le ou chaque groupe Y | représente indépendamment un atome d'halogène ou un radical alkyle, nitro, cyano, halogènoalkyle, alcoxy ou halogènoalcoxy; et |
| m | est 0 ou un nombre entier de 1 à 5, |

ou un de ses sels compatibles sur le plan environnemental;
et un deuxième herbicide qui est un herbicide de cyclohexanedione.

**2.** Composition selon la revendication 1, contenant un aryloxypicolinamide de formule I dans laquelle

| | |
|---|---|
| Z | est l'oxygène; |
| $R_1$ | est l'hydrogène; |
| q | est 0; |
| $R_3$ | est l'hydrogène; |
| X | est un radical halogènoalkyle; et |
| Y | est l'hydrogène ou le fluor. |

**3.** Composition selon la revendication 2, dans laquelle ledit aryloxypicolinamide de formule I est le picolinafène.

**4.** Composition selon la revendication 1, dans laquelle le deuxième herbicide est le tralkoxydime.

**5.** Composition selon la revendication 4, dans laquelle ledit aryloxypicolinamide de formule I est le picolinafène.

**6.** Composition herbicide synergique qui comprend un support acceptable en agriculture et une quantité efficace synergiquement d'une combinaison ternaire composée essentiellement
d'un aryloxypicolinamide de formule I

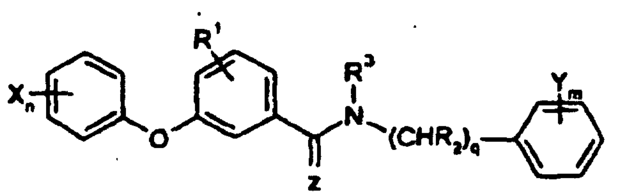

I

dans laquelle

| | |
|---|---|
| Z | représente un atome d'oxygène ou de soufre; |
| $R_1$ | représente un atome d'hydrogène ou d'halogène ou un radical alkyle ou halogènoalkyle; |
| $R_2$ | représente un hydrogène ou un radical alkyle; |
| q | est 0 ou 1; |
| $R_3$ | représente un hydrogène ou un radical alkyle ou alcényle; |
| le ou chaque groupe X | représente indépendamment un atome d'halogène ou un radical alkyle ou alcoxy, éventuellement substitué, de préférence un radical halogènoalkyle ou un radical alcényloxy, cyano, carboxy, alcoxycarbonyle, (alkylthio)carbonyle, alkylcarbonyle, amido, alkylamido, nitro, alkylthio, halogènoalkylthio, alcénylthio, alcynylthio, alkylsulfinyle, alkylsulfonyle, alkyloxyiminoalkyle ou alcényloxyiminoalkyle; |
| n | est 0 ou un nombre entier de 1 à 5; |
| le ou chaque groupe Y | représente indépendamment un atome d'halogène ou un radical alkyle, nitro, cyano, halogènoalkyle, alcoxy ou halogènoalcoxy; et |
| m | est 0 ou un nombre entier de 1 à 5; |

ou un de ses sels compatibles sur le plan environnemental;
un deuxième herbicide qui est un herbicide de cyclohexanedione et
un troisième herbicide qui est un 2,4-D ou un de ses esters ou sels compatibles sur le plan environnemental.

**7.** Composition selon la revendication 6, contenant un aryloxypicolinamide de formule I dans laquelle

Z est l'oxygène;
$R_1$ est l'hydrogène;
q est 0;
$R_3$ est l'hydrogène;
X est un radical halogènoalkyle; et
Y est l'hydrogène ou le fluor.

**8.** Composition selon la revendication 7, dans laquelle ledit aryloxypicolinamide de formule I est le picolinafène.

**9.** Composition selon la revendication 6, dans laquelle le deuxième herbicide est le tralkoxydime.

**10.** Composition selon la revendication 9, dans laquelle ledit aryloxypicolinamide de formule I est le picolinafène.

**11.** Procédé pour le contrôle synergique de plantes indésirables qui comprend une application sur le site desdites plantes ou sur les feuilles ou tiges desdites plantes une quantité efficace synergiquement des compositions revendiquées dans l'une des revendications 1 à 10.